# EUROPÄISCHE PATENTSCHRIFT

(11) **EP 1 228 914 B1**
(45) Veröffentlichungstag und Bekanntmachung des Hinweises auf die Patenterteilung: **26.09.2007**
(21) Anmeldenummer: 02001734.9
(22) Anmeldetag: 25.01.2002
(51) Int. Cl.: B60J 7/20, B60J 7/14, B60J 7/16

(54) **Cabriolet-Fahrzeug mit einem in einem Verdeckkasten ablegbaren Dach**
Convertible vehicle with a roof storable in a storage compartment
Véhicule convertible avec un toit escamotable dans un compartiment de stockage

(30) Priorität: 01.02.2001 DE 10104333
(43) Veröffentlichungstag der Anmeldung: 07.08.2002
(73) Patentinhaber: Wilhelm Karmann GmbH, 49084 Osnabrück (DE)
(72) Erfinder: Trost, Daniel, 49086 Osnabrück (DE)

(56) Entgegenhaltungen:
- DE-A- 3 623 468
- DE-C- 19 714 104
- DE-U- 29 809 008
- US-A- 5 864 214

## Beschreibung

Die Erfindung betrifft ein Cabriolet-Fahrzeug mit einem in einem Verdeckkasten ablegbaren Dach, wobei der Verdeckkasten gegenüber dem Kofferraum durch eine variable Trennvorrichtung abteilbar ist, nach dem Oberbegriff des Anspruchs 1. Ein solches Cabriolet-Fahrzeug ist zum Beispiel aus der DE 298 09 008 U1 bekannt.

Die DE 298 09 008 U1 zeigt ein Cabriolet-Fahrzeug, bei dem der Verdeckkasten einen Plattenkörper umfaßt, der zur Vergrößerung des Verdeckkastens um einen Zusatzraum im wesentlichen vertikal absenkbar ist und hierbei in den Kofferraum eindringt. Die Vergrößerung des Verdeckkastens um den Zusatzraum, die zur Ablage des geöffneten Daches erforderlich ist, kann daher nur stattfinden, wenn unterhalb des Plattenkörpers keine Hindernisse befindlich sind, der Kofferraum also hinreichend wenig Gepäckstücke enthält oder diese zumindest derart verteilt enthält, daß die Bewegungsbahn des Plattenkörpers 7 frei von Hindernissen verbleibt. Hiervon muß sich ein Benutzer jeweils überzeugen, wenn er das Dach öffnen und dafür den Verdeckkasten vergrößern will.

Eine automatisierte Verdeckablage ist daher nur dann möglich, wenn der Verdeckkasten sich ohnehin in der vergrößerten Position befindet. Waren hingegen zuvor Gepäckstücke im Kofferraum und der Verdeckkasten in seiner verkleinerten Stellung gehalten, muß der Benutzer zunächst aussteigen und manuell vom Kofferraum her die Vergrößerung des Verdeckkastens einstellen. Dieses verzögert die Dachöffnung und stellt eine Komforteinschränkung dar. Zudem besteht die Gefahr, daß trotz der manuellen Bedienung ein Gepäckstück übersehen wird und beim Bewegen des Plattenkörpers diesen beschädigt oder selbst beschädigt wird.

Aus der US-A-5,864,214 ist eine Sensorvorrichtung für einen Stauraum im Kofferraum eines Kraftfahrzeuges oder aber auch zur Erkennung der Besetztheit eines Sitzes in einem Kraftfahrzeug bekannt, die einen ersten und einen zweiten elektrischen Leiter aufweist, die zueinander parallel angeordnet sind und wobei bei dem zweiten Leiter eine Durchbiegung verhindert ist. Wird der flexible elektrische Leiter mit einem Gewicht belastet, wird er gegen den zweiten elektrischen Leiter gedrückt, was zur Erzeugung eines Signales führt. Daraufhin kann beispielsweise eine Absenkbewegung des Cabriolet-Daches angehalten werden. Diese im Kofferraumboden angeordnete Sensorvorrichtung ist im Alltagsbetrieb erheblichen Belastungen ausgesetzt, da jedes Beladen des Kofferraumes zu einer Beanspruchung der Sensorvorrichtung führt. Des weiteren kann hier der flexible elektrische Leiter nur dann zur Erzeugung des Signals benutzt werden, wenn eine Kraft ausgeübt wird, die in Richtung des fest angeordneten Leiters weist. Erfolgt hingegen eine Kraft in eine andere Richtung, wird kein Signal erzeugt, so daß in derartigen Fällen die Sensorvorrichtung nicht anspricht und mithin kein Signal liefert.

Es ist Aufgabe der vorliegenden Erfindung, ein Cabriolet-Fahrzeug der eingangs genannten Art so weiterzubilden, daß die Position eines Sensors optimiert wird um die Absenkbewegung der variablen Trennvorrichtung besser in den Ablauf der Öffnungsbewegung des Verdeckes zu integrieren.

Zur Lösung dieser Aufgabe zeichnet sich das Cabriolet-Fahrzeug der eingangs genannten Art durch die im Patentanspruch 1angegebenen Merkmale aus. Hinsichtlich weiterer vorteilhafter Ausgestaltungen wird auf die Ansprüche 2 bis 9 verwiesen.

Mit der erfindungsgemäßen Anordnung eines Sensors können Hindernisse, beispielsweise Gepäckstücke, in derBewegungsbahn des Plattenkörpers erfaßt werden und somit die Bewegung auch ohne optische Kontrolle durch einen Benutzer zuverlässig durchgeführt werden. Damit kann beispielsweise eine voll automatisierte Verdeckablage auch aus einer den Verdeckkasten verkleinernden Stellung der Trennvorrichtung heraus, etwa wenn zuvor bei geschlossenem Dach mit belegtem Kofferraum gefahren und anschließend eine Umstellung der Trennvorrichtung nicht vorgenommen wurde, durchgeführt werden

Dabei wird der erfindungsgemäß an dem Plattenkörper angeordnete Sensor mit dem Plattenkörper bewegt, also abgesenkt und aufwärts bewegt, je nach der einzunehmenden Lage des Plattenkörpers bzw. der Plattenkörper, wobei der Sensor bei einer Absenkbewegung gegen etwaige störende Gegenstände bewegt wird. Trifft der Sensor auf den Gegenstand, wird das entsprechende Signal erzeugt und der Plattenkörper kann stoppen bzw. auch automatisch nach oben gefahren werden. Damit ist vermieden, daß ein Gegenstand beispielsweise eingeklemmt wird. Da der Sensor mit der variablen Trennvorrichtung bewegbar ist, kann er in einem Vormontageschritt an dieser angeordnet werden.

In der Endmontage kann das fertig montierte Modul in einem Schritt eingesetzt werden.

Bei Ausbildung eines mehrere flächige Folien umfassenden kapazitiven Sensors kann die gesamte Fläche unterhalb eines Plattenkörpers mittels nur eines Sensors abgefragt werden, wodurch ein Hindernis an beliebiger Stelle innerhalb der Bewegungsbahn geortet werden kann. Durch eine elastische Verformbarkeit der Folien sowie des Dilektrikums können auch Hindernisse, die selber nachgiebig sind, beispielsweise Taschen oder ähnliche weiche Hindernisse, zuverlässig erkannt werden.

Weitere Vorteile und Merkmale ergeben sich aus nachfolgend beschriebenen und in der Zeichnung dargestellten Ausführungsbeispielen des Gegenstandes der Erfindung. In der Zeichnung zeigt:
- Fig. 1:: Den Heckbereich eines erfindungsgemäßen Cabriolet-Fahrzeugs in schematischer Seitenansicht bei abgesenktem Plattenkörper zur Vergrößerung des Verdeckkastens und bei aufwärtsbewegtem Plattenkörper zur Vergrößerung des Kofferraums (gestrichelt eingezeichnet),

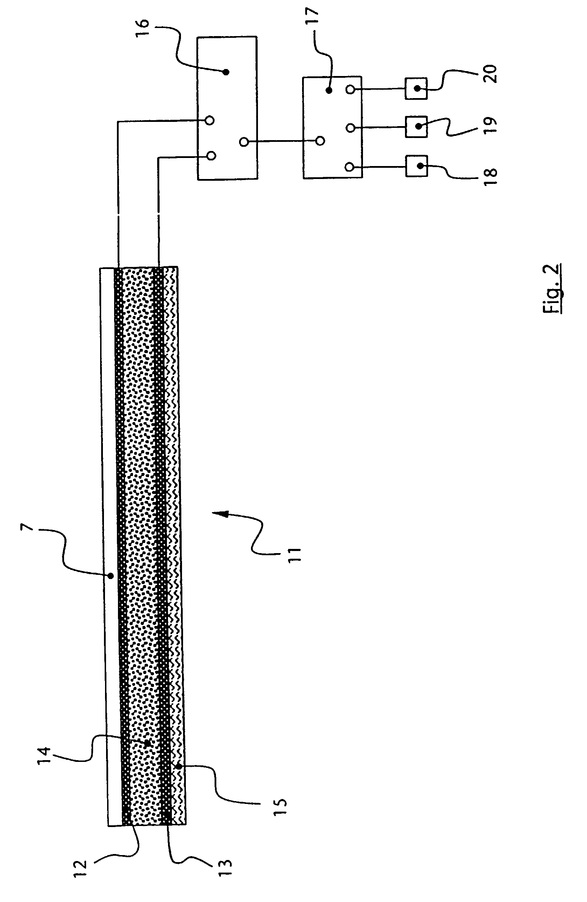

- Fig. 2:: Einen Ausschnitt aus dem Plattenkörper mit daran angeordnetem kapazitivem Sensor.

Das erfindungsgemäße Cabriolet-Fahrzeug 1 weist ein falt- oder klappbares Dach 2 auf, daß in einen Verdeckkasten 3 abgelegt werden kann. Dieser befindet sich im hinteren Fahrzeugbereich und ist dem Kofferraum 5 benachbart.

Der Verdeckkasten 3 kann permanent bestehen oder nur zur Aufnahme des geöffneten Dachs gebildet werden.

Zur Abtrennung zwischen dem Verdeckkasten 3 und dem Kofferraum 5 ist eine variable Trennvorrichtung 4 vorgesehen, die einen Zusatzraum 6 ober- bzw. unterseitig und gegebenenfalls seitlich begrenzt und zwischen einer Verdeckaufnahmestellung, in der der Zusatzraum 6 einen Teil des Verdeckkastens 3 ausbildet und diesen vergrößert, und einer Gepäckaufnahmestellung, in der der Zusatzraum 6 einen Teil des Kofferraums 5 ausbildet und diesen vergrößert, bewegbar ist.

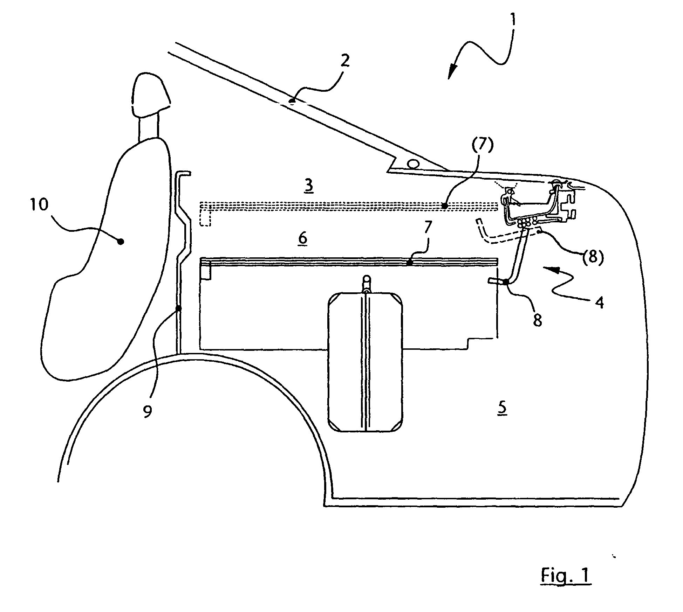

Im Ausführungsbeispiel umfaßt die Trennvorrichtung 4 einen sich im wesentlichen horizontal erstreckenden ersten Plattenkörper 7, der in Fig. 1 in einer unteren Position, in der die Trennvorrichtung 4 sich in Verdeckaufnahmestellung befindet, sowie - gestrichelt - in einer oberen Position, in der die Trennvorrichtung 4 sich in Gepäckaufnahemstellung befindet, dargestellt ist. Zudem ist ein zweiter Plattenkörper 8 ausgebildet, der rückseitig und schwenkbar an den ersten Plattenkörper 7 anschließt.

Der Plattenkörper 7 ist zwischen der Verdeckaufnahmestellung und der Gepäckaufnahmestellung vertikal auf- und abbeweglich. Der zweite Plattenkörper 8 ist zwischen den benannten Stellungen schwenkbeweglich.

Die Erfindung ist nicht auf eine Version mit zwei Plattenkörpern 7,8 beschränkt. Auch eine Trennvorrichtung 4 mit nur einem oder mindestens drei Plattenkörpern kann erfindungsgemäß ausgebildet sein. Die Plattenkörper 7, 8 müssen nicht als durchgehende Platten ausgebildet sein, sondern können beispielsweise auch durch etwa textilbespannte Rahmen oder andere zumindest teilweise nachgiebige flächige Abtrennungen ausgebildet sein.

Im dargestellten Ausführungsbeispiel umfaßt die Trennvorrichtung 4 eine horizontal liegende Bodenplatte, beispielsweise aus Holz, Metall oder Kunststoff, die sich rückwärtig an eine Spritzwand 9, die den Innenraum vom Heckbereich des Cabriolet-Fahrzeugs abtrennt, anschließt. Die eingezeichnete Sitzreihe 10 kann dabei sowohl bei einem zweisitzigen Fahrzeug die vordere Sitzreihe als auch bei einem mehrsitzigen Fahrzeug eine hintere Sitzreihe darstellen. An dem horizontalen Plattenkörper 7 ist rückseitig ein schwenkbares Plattenteil 8 angehängt, das mit seinem oberen, dem Plattenkörper 7 abgewandten Bereich schwenkbar an der Fahrzeugkarosserie gehalten ist. Der Plattenkörper 7 ist über beispielsweise als Elektro- oder Pneumatikmotoren ausgebildete seitliche Antriebe (nicht eingezeichnet) oder über eine manuelle Betätigung vertikal beweglich und verbleibt während dieser Bewegung in seiner horizontalen Lage. Im Ausführungsbeispiel ist lediglich dem horizontalen Plattenkörper 7 ein Sensor 11 zugeordnet. Eine Zuordnung eines weiteren Sensors zu dem schwenkbeweglichen Plattenkörper 8 wäre ebenfalls möglich.

Der Sensor 11 kann als berührungslos erfassender Sensor, beispielsweise mittels Ultraschall oder einer Lichtschranke, ausgebildet sein (nicht gezeichnet).

Im Ausführungsbeispiel ist ein kapazitiver Sensor 11 gezeichnet, der zwei elektrisch leitfähige Schichten 12, 13 umfaßt, die mit Abstand zueinander angeordnet sind und den Plattenkörper 7 flächig untergreifen. Die leitfähigen Schichten 12, 13 können beispielsweise durch metallische Folien oder auch durch Kunststoffe mit Einlagerungen, die die Leitfähigkeit sicherstellen, gebildet sein. Zwischen den leitfähigen Platten oder Folien 12, 13 befindet sich ein Dielektrikum 14, das mechanisch unempfindlich und elastisch verformbar sein kann und insbesondere unter Kostengesichtspunkten ausgewählt werden kann. Etwa kann ein Schaumstoff Verwendung finden.

Unterhalb der äußeren leitfähigen Lage 13 liegt eine flexible und ebenfalls elastisch verformbare mechanisch beanspruchbare Schutzschicht 15, etwa eine Kunststoffschicht, die im Kollisionsfall in Kontakt mit unter der Trennvorrichtung liegenden Gepäckstücken treten kann, beispielsweise mit dem Griff eines Koffers (Fig. 1).

Der kapazitive Sensor 11 ist mit einer Kontrolleinheit 16 verbunden, über die eine Kapazitätsänderung, hervorgerufen durch eine Deformation und damit eine Veränderung des Abstands zwischen den Platten 12, 13, meßbar ist. Mit der Kontrolleinheit 16 ist ein Steuergerät 17 verschaltet, über das verschiedene Antriebseinheiten 18, 19, 20 ansteuerbar sein können, um damit die Bewegung des Daches und der Trennvorrichtung 4 bewirken zu können.

In Funktion wird zur Ablage des Daches 2 im Verdeckkasten 3 die Trennvorrichtung 4 aus der Gepäckaufnahmestellung in die Verdeckaufnahmestellung überführt, wozu beispielsweise eine manuelle, eine halbautomatische Betätigung aus dem geöffneten Kofferraum oder insbesondere eine vollautomatische Fernbetätigung aus dem Fahrzeuginnenraum genutzt werden kann. Die leitfähigen Folien oder Platten 12, 13 werden durch das Kontrollgerät 16 mit elektrischen Potentialen belegt, so daß sich zwischen den Platten 12, 13 eine elektrische Spannung aufbaut.

Bei der Abwärtsbewegung des Plattenkörpers 7 bzw. bei einer schwenk- oder anders gearteten Bewegung von Teilen der Trennvorrichtung 4 bleibt die anliegende Spannung konstant, ohne eine Kollision mit einem Hindernis auch die Geometrie des so gebildeten Kondensators, so daß die Kapazität des Kondensators 12, 13, 14 während der Bewegung unverändert bleibt.

Sofern allerdings während der Bewegung eine Kollision mit einem Hindernis stattfindet, wird die flexible Kunststoffschicht 15 eingedrückt, wodurch eine punktuelle Änderung des Plattenabstandes zwischen den leitfähigen Folien oder Platten 12, 13 stattfindet und damit die Kapazität des Kondensators 12, 13, 14 der den Sensor 11 bildet, verändert wird. In diesem Falle gibt die Kontrolleinheit 16 ein Signal an das Steuergerät 17 aus, das daraufhin das weitere Herunterfahren des Plattenkörpers 7 zumindest stoppt und gegebenenfalls eine sofortige Umkehrbewegung einleitet. Eine Umkehrbewegung ist insbesondere sinnvoll, um eine Einklemmen von Gepäckstücken unterhalb des Plattenkörpers 7 zu vermeiden.

Wenn das Dilektrikum 14 als beispielsweise weicher Schaumstoff ausgebildet ist und auch die äußere Kunststoffschicht 15 eine hohe Flexibilität aufweist, kann mit großer Empfindlichkeit auf unterhalb des Plattenkörpers 7 liegende Hindernisse reagiert werden.

Um die Abwärtsbewegung des Plattenkörpers 7 zur Vergrößerung des Verdeckkastens 3 zu bewirken, kann entweder vorgesehen sein, daß der Plattenkörper 7 durch das einzulegende Dach 2, etwa einen Spannbügel, zwangsbewegt wird, wobei das einzulegende Dach 2 dann gegen Gasdruckfedern, mechanische Federn, Gummielemente oder dergleichen anarbeiten würde, die eine aufwärtsgerichtete Kraft auf den horizontalen Plattenkörper 7 ausüben, um diesen bei nicht eingelegtem Dach 2 in jedem Fall in den Gepäckaufnahmestellung zu halten.

Alternativ kann ein eigener Antrieb für die Trennvorrichtung 4 vorgesehen sein. Dabei kann vor Ablage des Daches in gemeinsamer Steuerung mit der Dachablage der horizontale Plattenkörper 7 abwärts verfahren werden und nach Schließen des Daches wieder aufwärts verfahren werden. In diesem Fall würde die Steuerung der Trennvorrichtung 4 jeweils in Abhängigkeit der Steuerung der Verdeckablage verlaufen. Alternativ ist auch möglich, eine Sperrklinkenverrastung oder dergleichen vorzusehen, um grundsätzlich die Trennvorrichtung 4 in Verdeckaufnahmestellung zu halten und nur bei Einlagerung von Gepäck etwa durch einen manuellen Auslöseschalter die Sperrklinken zu lösen und somit eine beispielsweise über Gasdruckfedern oder dergleichen Federelemente unterstützte Aufwärtsbewegung des horizontalen Plattenkörpers 7 zu bewirken.

Es ist zusätzlich oder alternativ auch möglich, beispielsweise vom Fahrersitz aus die Steuerung der Trennvorrichtung 4 unabhängig von der Dachablage vorzunehmen, das heißt, daß auch bei geschlossenem Dach eine Abwärtsverlagerung des Plattenkörpers 7 vorgenommen werden kann. Eine Aufwärtsverlagerung ist dann ebenso möglich. Diese wird bei geöffnetem Dach durch eine entsprechende Sicherungsschaltung gehemmt.

In jedem Fall stoppt die Abwärtsbewegung des horizontalen Plattenkörpers 7 bei Auslösen des Sensors 11, mit dem ein Hindernis in der Bewegungsbahn erkannt wird. Entsprechend wird ein Signal an die Verdecksteuerung gegeben, daß das Verdeck erst dann einfahren kann, wenn der Plattenkörper 7 seine Verdeckaufnahmestellung, also die untere Extremalstellung, erreicht hat.

Der zusätzliche Sensor bedeutet einen geringen Fertigungsaufwand. Wenn beispielsweise der beschriebene kapazitive Sensor 11 Verwendung findet, ist auch die Raumeinschränkung, die daraus resultiert, minimal. Ein erheblicher Sicherheits- und Komfortgewinn wird erreicht.

## Patentansprüche

1. Cabriolet-Fahrzeug (1) mit einem in einem Verdeckkasten (3) ablegbaren Dach (2), wobei der Verdeckkasten (3) in einem rückwärtigen Fahrzeugbereich an den Kofferraum (5) angrenzend gelegen und gegenüber diesem durch eine variable Trennvorrichtung (4) abteilbar ist, die einen Zusatzraum (6) zumindest bereichsweise begrenzt und zwischen einer Verdeckaufnahmestellung, in der der Verdeckkasten um den Zusatzraum (6) vergrößert ist und einer Gepäckaufnahmestellung, in der der Zusatzraum (6) einen Teil des Kofferraums (5) ausbildet, bewegbar ist, wobei die Trennvorrichtung (4) zumindest einen beweglichen Plattenkörper (7,8) umfaßt,
**dadurch gekennzeichnet,**
**daß** dem Plattenkörper (7,8) ein Sensor (11) zur Erfassung eines Hindernisses in seiner Bewegungsbahn zugeordnet und der Sensor (11) an dem Plattenkörper (7,8) angeordnet ist.

2. Cabriolet-Fahrzeug nach Anspruch 1,
**dadurch gekennzeichnet,**
**daß** der Sensor (11) unterhalb des beweglichen Plattenkörpers (7) gelegen ist.

3. Cabriolet-Fahrzeug nach einem der Ansprüche 1 oder 2,
**dadurch gekennzeichnet,**
**daß** der Sensor berührungsfrei arbeitet.

4. Cabriolet-Fahrzeug nach Anspruch 3,
**dadurch gekennzeichnet,**
**daß** der Sensor eine Lichtschranke umfaßt.

5. Cabriolet-Fahrzeug nach einem der Ansprüche 1 oder 2,
**dadurch gekennzeichnet,**
**daß** der Sensor (11) ein kapazitiver Sensor ist.

6. Cabriolet-Fahrzeug nach Anspruch 5,
**dadurch gekennzeichnet,**
**daß** der Sensor (11) unterhalb des Plattenkörpers (7) befindliche und sich parallel zu diesem erstreckende elektrisch leitfähige Folien (12;13) mit einem dazwischen befindlichen Dilektrikum (14) umfaßt.

7. Cabriolet-Fahrzeug nach Anspruchs 6,
**dadurch gekennzeichnet,**
**daß** die Folien (12;13) und das Dilektrikum (14) elastisch verformbar sind.

8. Cabriolet-Fahrzeug nach einem der Ansprüche 1 bis 7,
**dadurch gekennzeichnet,**
**daß** die variable Trennvorrichtung (4) fernbetätigbar ist.

## Claims

1. Convertible motor vehicle (1) with a roof (2) capable of being deposited in a convertible soft top box (3), wherein the convertible soft top box (3) is located in a rear part of the vehicle adjacent to the luggage space (5) and can be separated from this by means of a variable separation device (4), which delimits at least section by section an additional space (6) and is capable of movement between a cover accommodation position in which the convertible soft top box is enlarged by the additional space (6) and a luggage accommodation position in which the additional space (6) forms a part of the luggage space (5), wherein the separation device (4) comprises at least one movable plate body (7, 8), **characterised in that** allocated to the plate body (7, 8) is a sensor (11) for the detection of an obstacle in its movement path and the sensor (11) is arranged on the plate body (7, 8).

2. Convertible motor vehicle according to Claim 1, **characterised in that** the sensor (11) is located beneath the movable plate body (7).

3. Convertible motor vehicle according to Claim 1 or 2, **characterised in that** the sensor operates free of contact.

4. Convertible motor vehicle according to Claim 3, **characterised in that** the sensor comprises a light barrier.

5. Convertible motor vehicle according to Claim 1 or 2, **characterised in that** the sensor (11) is a capacitative sensor.

6. Convertible motor vehicle according to Claim 5, **characterised in that** the sensor (11) comprises electrically conductive films (12; 13) located beneath the plate body (7) and extending parallel to it, with a dielectric element (14) located therebetween.

7. Convertible motor vehicle according to Claim 6, **characterised in that** the films (12; 13) and the dielectric element (14) are elastically deformable.

8. Convertible motor vehicle according to any one of Claims 1 to 7, **characterised in that** the variable separation device (4) is capable of being remotely controlled.

## Revendications

1. Véhicule décapotable (1) ayant une capote (2) pouvant être rangée dans un coffre de rangement de la capote (3), le coffre de rangement de la capote (3) étant situé dans une partie arrière du véhicule, contiguë au coffre à bagages (5) et pouvant être séparé de celui-ci par un dispositif de séparation variable (4) délimitant au moins partiellement un espace supplémentaire (6) et pouvant être déplacé entre une position de réception de la capote, dans laquelle le coffre de rangement de la capote est agrandi de l'équivalent de l'espace supplémentaire (6), et une position de réception de bagages, dans laquelle l'espace supplémentaire (6) constitue une partie du coffre à bagages, le dispositif de séparation (4) comprenant au moins un corps de plaque mobile (7, 8),
**caractérisé en ce qu'**un capteur (11) destiné à détecter un obstacle dans la trajectoire de mouvement du corps de plaque est associé au corps de plaque (7, 8), et que le capteur (11) est monté sur le corps de plaque (7, 8).

2. Véhicule décapotable selon la revendication 1, **caractérisé en ce que** le capteur (11) est situé en dessous du corps de plaque mobile (7).

3. Véhicule décapotable selon l'une des revendications 1 ou 2, **caractérisé en ce que** le capteur fonctionne sans contact.

4. Véhicule décapotable selon la revendication 3, **caractérisé en ce que** le capteur comprend un barrage photoélectrique.

5. Véhicule décapotable selon l'une des revendications 1 ou 2, **caractérisé en ce que** le capteur (11) est un capteur capacitif.

6. Véhicule décapotable selon la revendication 5, **caractérisé en ce que** le capteur (11) comprend des films électriquement conducteurs (12; 13) situés en dessous du corps de plaque (7) et s'étendant parallèlement à celui-ci, et un corps diélectrique (14) disposé entre ceux-ci.

7. Véhicule décapotable selon la revendication 6, **caractérisé en ce que** les films (12; 13) et le corps diélectrique sont élastiquement déformables.

8. Véhicule décapotable selon l'une des revendications 1 à 7, **caractérisé en ce que** le dispositif de séparation variable (4) peut être commandé à distance.
